# EUROPEAN PATENT SPECIFICATION

(11) **EP 1 508 227 B1**
(45) Date of publication and mention of the grant of the patent: **06.08.2008**
(21) Application number: 03731245.1
(22) Date of filing: 08.05.2003
(51) Int. Cl.: H04L 12/56

(54) **BUFFER MEMORY RESERVATION**
PUFFERSPEICHER RESERVIERUNG
RESERVATION DE MEMOIRE TAMPON

(30) Priority: 29.05.2002 US 158291
(43) Date of publication of application: 23.02.2005
(73) Proprietor: Intel Corporation, Santa Clara, CA 95052 (US)
(72) Inventor: HUANG, Anguo, Mountain View, CA 94040 (US); CAIA, Jean-Michel, San Francisco, CA 94110 (US); LING, Jing, Fremont, CA 94538 (US); CALDERON, Juan-Carlos, Fremont, CA 94536 (US); JOSHI, Vivek, Sunnyvale, CA 94089 (US)
(74) Representative: Dunlop, Hugh Christopher
(86) International application number: PCT/US2003/015729
(87) International publication number: WO 2003/103236

(56) References cited:
- EP-A- 0 706 298
- WO-A-01/63858
- WO-A-97/03549
- US-A- 5 867 663
- LIN A Y M ET AL: "PRIORITY QUEUEING STRATEGIES AND BUFFER ALLOCATION PROTOCOLS FOR TRAFFIC CONTROL AT AN ATM INTEGRATED BROADBAND SWITCHING SYSTEM" IEEE JOURNAL ON SELECTED AREAS IN COMMUNICATIONS, IEEE INC. NEW YORK, US, vol. 9, no. 9, 1 December 1991 (1991-12-01), pages 1524-1536, XP000267541 ISSN: 0733-8716

## Description

### BACKGROUND

The following description relates to a digital communication system, and more particularly to a system that includes a high speed packet-switching network that transports packets. High speed packet-switching networks, such as Asynchronous Transfer Mode (ATM), Internet Protocol (IP), and Gigabit Ethernet, support a multitude of connections to different sessions in which incoming packets compete for space in a buffer memory.

Digital communication systems typically employ packet-switching systems that transmit blocks of data called packets. Typically, a message or other set of data to be sent is larger than the size of a packet and must be broken into a series of packets. Each packet consists of portion of the data being transmitted and control information in a header used to route the packet through the network to its destination.

US 5,867,663 discusses a method and apparatus for controlling network service parameters in a cell based communications network. A plurality of input signals are received on input ports of a communications device and a plurality of output signals are sourced from output ports, wherein at least one input signal and at least one output signal comprise, respectively, at least one virtual connection. A first virtual connection is assigned to an input queue of an input port and an output queue of an output port. Each queue is associated with a first buffer space dedicated to the respective queue. Each queue is also associated with a second buffer space that is shared between the respective queue and other queues. The second buffer space is utilized after the first buffer space becomes full. Bandwidth into a switching fabric is allocated by the input port, and bandwidth out of the device is allocated by the output port.

### DESCRIPTION OF DRAWINGS

Fig. 1 is a diagram of a packet-switching network.
Fig. 2 is a diagram of a buffer memory used to store incoming packets.
Fig. 3 is a state diagram for a process performed to reserve buffer memory space to store incoming packets.
Figs. 4, 5 and 6 are flow charts illustrating processes for reserving buffer memory space to store incoming packets.

Like reference symbols in the various drawings indicate like elements.

### DETAILED DESCRIPTION

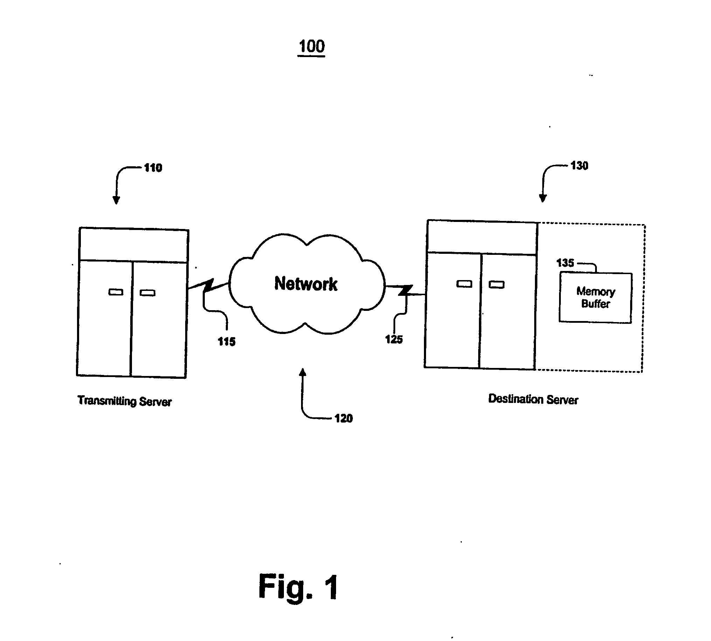

Fig. 1 shows a typical packet-switching system that includes a transmitting server 110 connected through a communication pathway 115 to a packet-switching network 120 that is connected through a communication pathway 125 to a destination server 130. The transmitting server 110 sends a message through the packet-switching network 120 to the destination server 130 as a series of packets. In the packet-switching network 120, the packets typically pass through a series of servers. As each packet arrives at a server, the server stores the packet briefly in buffer memory before transmitting the packet to the next server. The packet proceeds through the network until it arrives at the destination server 130, which stores the packet briefly in buffer memory 135 as the packet is received.

High-speed packet-switching networks are capable of supporting a vast number of connections (also called flows). Some broadband networks, for example, may support in each line card 256,000 connections through 64 logical ports. Each incoming packet from a flow may be stored in a data queue in buffer memory upon receipt. If no buffer memory space is available to store a particular packet, the incoming packet is dropped.

Network applications may require a guaranteed rate of throughput, which may be accomplished by using buffer memory reservation to manage a data queue used to store incoming packets. Buffer memory reservation reserves a portion of a data queue as a dedicated queue for each flow, reserves another portion of a data queue as a shared queue, and associates a portion of the shared queue with each flow. The dedicated queue size provided to each flow provides a guaranteed rate of throughput for incoming packets, and the shared queue provides space to buffer packets during periods having peak rates that exceed the guaranteed rate of throughput. The dedicated queue may have one or more reserved memory addresses assigned to it or may be assigned memory space without reference to a particular reserved memory address. Similarly, the shared queue may have one or more reserved memory addresses assigned to it or may be assigned memory space without reference to a particular reserved memory address. The amount of the buffer memory reserved by the dedicated queue portions and the shared queue portion for all of the flows may exceed the amount of physical memory available to buffer incoming packets. However, the amount of buffer memory reserved by the dedicated queue portions may not exceed the amount of physical memory available to buffer incoming packets.

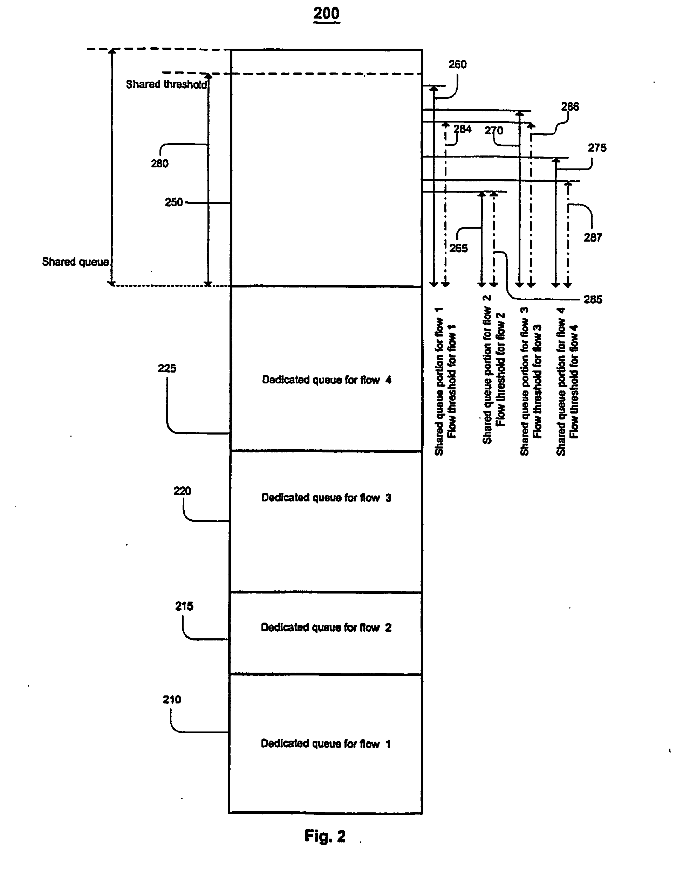

As shown in Fig. 2, the buffer memory for a data queue 200 used to store incoming packets is apportioned into queues 210, 215, 220, and 225 dedicated to each flow and a shared queue 250. For brevity, Fig. 2 illustrates only a small portion of data queue 200. The portion of the shared queue 250 associated with each flow is shown by arrows 260, 265, 270, 275. Eighty percent of the shared queue size is associated with a first flow in portion 260, forty eighty percent of the shared queue size is associated with a second flow in portion 265, seventy-five percent of the shared queue size is associated with a third flow in portion 270, and fifty-five percent of the shared queue size is associated with a fourth flow in portion 275. The sum of the sizes of the dedicated queues 210, 215, 220, 225 and the sizes of the shared queue portions 260, 265, 270, 275 exceeds the amount of physical memory available to store incoming packets.

The unused portion of the data queue 200 may decrease during the time period from when the determination is made that space is available in the data queue to store a particular incoming packet to when the particular incoming packet is stored. Such a decrease in the unused portion of the data queue may prevent the particular incoming packet from being stored, and may result in the incoming packet being dropped.

A shared threshold 280 that is less than the size of the shared queue may reduce the number of incoming packets that are dropped because of such a data queue increase. The shared threshold 280 may be set to a value that is less than or equal to the size of the shared queue 250, with the actual value of the threshold being selected based on a balance between the likelihood of dropping packets (which increases as the shared threshold increases) and the efficiency with which the shared queue is used (which decreases as the shared threshold decreases). In addition, a flow threshold 284-287 that is less than or equal to the size of the shared queue portion 260, 265, 270, 275 associated with the flow may be set for each flow.

The size of the dedicated queues used in buffer memory reservation implementations may be the same for all flows or may vary between flows. An implementation may use the same flow threshold values for all flows, may vary the flow threshold values between flows, or may use no flow thresholds.

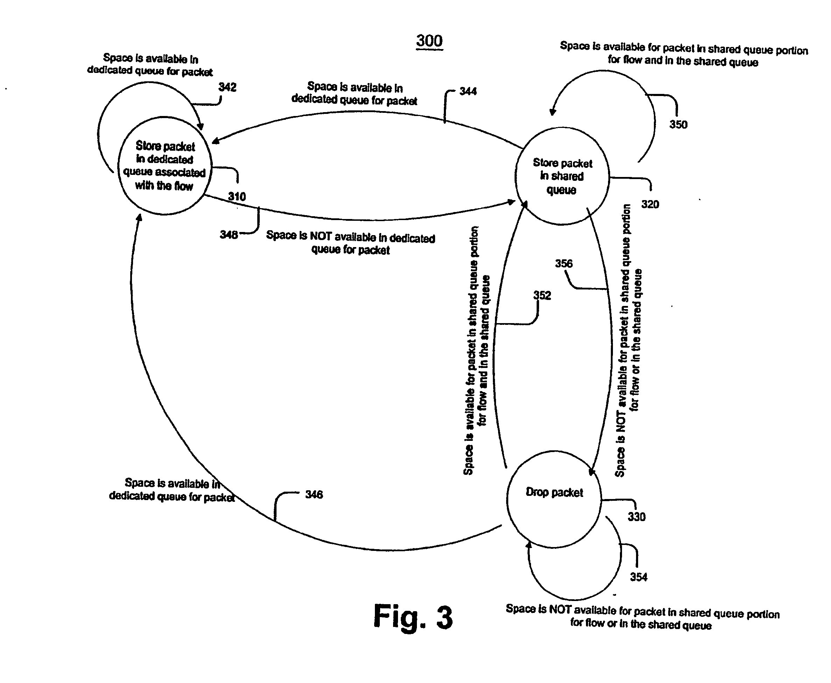

Fig. 3 illustrates a state diagram 300 for execution of buffer memory reservation on a processor. After receiving an incoming packet, the processor may store the incoming packet from a flow in the dedicated queue associated with the flow (state 310), may store the incoming packet in the shared queue (state 320), or may drop the packet (state 330).

The processor stores the incoming packet from a flow in the dedicated queue associated with the flow (state 310) if space is available in the dedicated queue for the packet (transitions 342, 344, 346). For a particular flow, the processor remains in state 310 (transition 342) until the dedicated queue for the flow is full.

When space is not available in the dedicated queue (transition 348), the incoming packet may be stored in the shared queue (state 320) if space is available in the shared queue portion for the flow and in the shared queue (transition 350). Space must be available both in the shared queue portion for the flow and the shared queue because the physical memory available to the shared queue may be less than the amount of space allocated to the sum of the shared queue portions for all of the flows. When there is no space available to store the incoming packet in the shared queue or the dedicated queue (transitions 354, 356), the incoming packet is dropped from the flow of packets (state 330). The processor continues to drop incoming packets until space becomes available in the shared queue (transition 352) or the dedicated queue (transition 346).

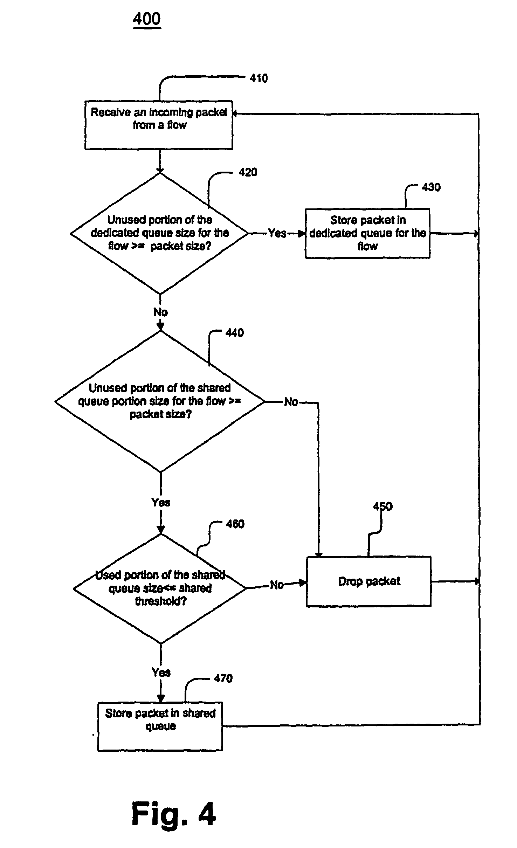

Referring to Fig. 4, a process 400 uses the size of the incoming packet to determine whether space is available in the shared queue portion for a flow. The implementation of the process 400 in Fig. 4 uses a shared threshold for the shared queue that is equal to the size of the shared queue and does not associate a flow threshold with the flow from which the incoming packets are received.

The process 400 begins when a processor receives an incoming packet from a flow (410). The processor determines whether the unused portion of the dedicated queue size for the flow is greater than or equal to the packet size (420). If so, the processor stores the packet in the dedicated queue for the flow (430) and waits to receive another incoming packet from a flow (410).

If the processor determines that the unused portion of the dedicated queue size is less than the packet size (e.g., space is not available to store the packet in the dedicated queue for the flow), the processor determines whether the size.of the unused portion of the shared queue portion for the flow is greater than or equal to the packet (440), and, if not, drops the packet (450). The packet is dropped because neither the dedicated queue for the flow nor the shared queue portion for the flow has sufficient space available to store the packet. After dropping the packet, the processor waits to receive another incoming packet (410).

If the processor determines that the size of the unused portion of the shared queue portion for the flow is greater than or equal to the packet size, the processor determines whether the used portion of the shared queue is less than or equal to the shared threshold (460). If so, the processor stores the packet in the shared queue (470) and waits to receive another incoming packet from a flow (410). If the processor determines that the used portion of the shared queue size is greater than the shared threshold, the processor drops the packet (450) and waits to receive an incoming packet from a flow (410) .

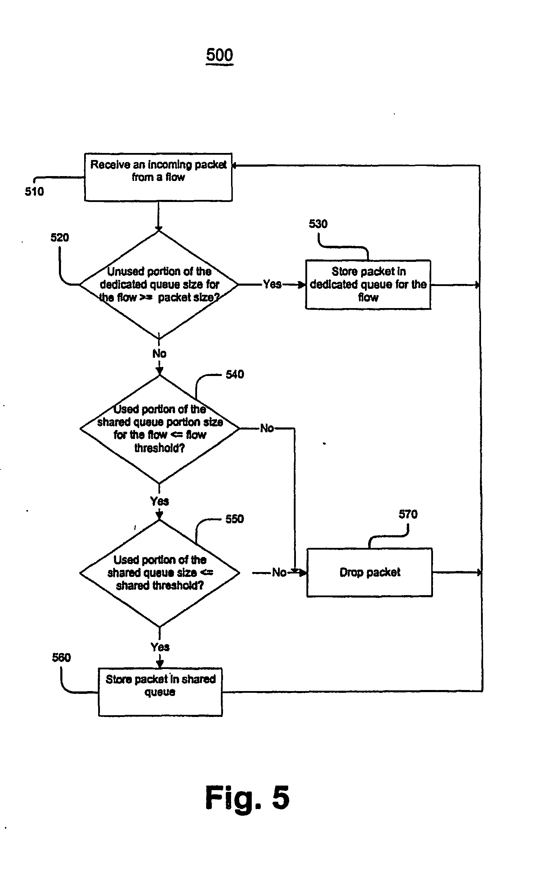

Referring to Fig. 5, a process 500 uses a flow threshold to determine whether space is available in the shared queue portion for a flow. The process 500 uses a shared threshold for the shared queue that is less than the size of the shared queue and associates with each flow a flow threshold that is less than the size of the shared queue portion associated with the flow.

The process 500 begins when a processor receives an incoming packet from a flow (510), determines whether the dedicated queue for the flow has space available for the packet (520), and, when space is available, stores the incoming packet in the dedicated queue for the flow (530). If space is not available in the dedicated queue for the flow (520), the processor determines whether the used portion of the shared queue portion is less than or equal to the flow threshold (540). This is in contrast to the implementation described with respect to Fig. 4, where the processor determines whether the shared queue portion has space available based on the size of the incoming packet and does not use a flow threshold.

If the flow threshold is satisfied, the processor determines whether the used portion of the shared queue is less than or equal to the shared threshold (550). The processor stores the packet in the shared queue (560) only if the used portions of the shared queue portion and the shared queue are less than or equal to their respective thresholds. Otherwise, the processor drops the incoming packet (570). The processor then waits for an incoming packet (510) and proceeds as described above.

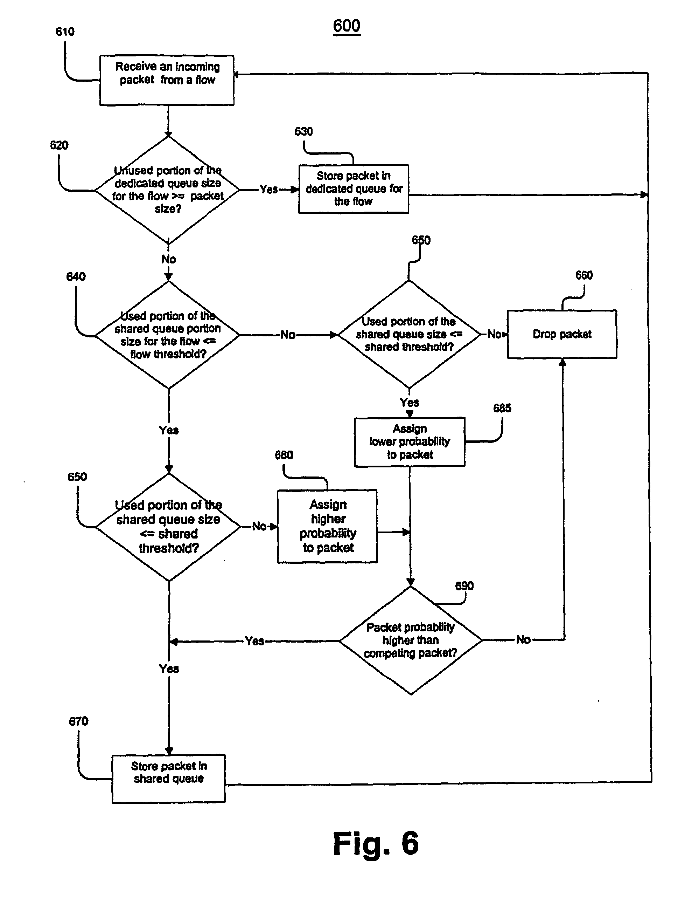

Referring to Fig. 6, a process 600 assigns a probability of being accepted into the shared queue to a particular received packet and accepts the received packet into the shared queue when the particular packet has a higher probability of being accepted than the probabilities assigned to other incoming packets that are competing for buffer memory space.

The process 600 begins when a processor receives an incoming packet from a flow (610), determines whether the dedicated queue for the flow has space available for the packet (620), and, when space is available, stores the incoming packet in the dedicated queue for the flow (630). If space to store the packet is not available in the dedicated queue for the flow, the processor determines whether the used portion of the shared queue portion for the flow is less than or equal to the flow threshold (640) and determines whether the used portion of the shared queue is less than or equal to the shared threshold (650). Based on those determinations, the processor may drop the packet or store the packet in the shared queue as set forth in the table below.

| **Used portion of the shared queue portion less than or equal to flow threshold** | **Used portion of the shared queue less than or equal to shared threshold** | **Assign probability to packet (optional)** | **Storage result** |
|---|---|---|---|
| Yes | Yes | | Store packet in shared queue |
| Yes | No | Assign higher probability to packet | Store packet in shared queue if packet probability is higher than competing packets; else drop packet |
| No | Yes | Assign lower probability to packet | Store packet in shared queue if packet probability is higher than competing packets; else drop packet |
| No | No | | Drop packet |

The packet is dropped (660) when the used portion of the shared queue portion is greater than the flow threshold and the used portion of the shared queue is greater than the shared threshold.

The packet is stored in the shared queue (670) when the used portion of the shared queue portion is less than or equal to the flow threshold and the used portion of the shared queue size is less than or equal to the shared threshold.

If neither of those two conditions exist, the processor assigns the packet a higher probability of being stored in the shared queue (680) when the used portion of the shared queue portion is less than or equal to the flow threshold and the used portion of the shared queue is greater than the shared threshold. The processor assigns the packet a lower probability of being stored in the shared queue (685) when the used portion of the shared queue portion is greater than the flow threshold and the used portion of the shared queue is less than or equal to the shared threshold. The processor then determines whether the probability assigned to the packet is greater than the probability assigned to other incoming packets that are competing for buffer memory space (690). If so, the processor stores the packet in the shared queue (670; otherwise, the packet is dropped (660).

Buffer memory reservation helps to provide a guaranteed rate of throughput for incoming packets and to avoid buffer congestion. Buffer memory reservation techniques provide a variety of parameters that can be used to manage the network application, including a shared threshold, a flow threshold for each flow, a dedicated queue for each flow, a shared queue, and a shared queue portion for each flow. Some implementations may predesignate parameters, while other implementations may vary the parameters based on current network conditions.

The benefits of buffer memory reservation for packet applications are applicable to other implementations of packet-switching networks that use fixed-length or variable-length packets.

Implementations may include a method or process, an apparatus or system, or computer software on a computer medium.

For example, advantageous results still could be achieved if steps of the disclosed techniques were performed in a different order and/or if components in the disclosed systems were combined in a different manner and/or replaced or supplemented by other components.

## Claims

1. A buffer memory management method for a packet-switching application, the method comprising:
associating each of a plurality of flows of packets with a dedicated queue (210,215,220,225) and a particular portion (260,265,270,275) of a shared queue (250),
**characterised in that**:
each dedicated queue has a dedicated queue size and each particular portion of the shared queue has a size and a flow threshold,
the shared queue has a shared threshold, and
a sum of the dedicated queue sizes and the shared queue sizes for all of the flows exceeds an amount of physical memory available to buffer packets;
and by comprising the steps of:
accepting (430;530;630) a particular packet from a particular flow of packets into the dedicated queue associated with the particular flow if a size of an unused portion of the dedicated queue associated with the particular flow is greater than or equal to a size of the particular packet;
accepting (470;560;670) the particular packet from the particular flow of packets into the associated particular portion of the shared queue if the particular packet is not accepted by the dedicated queue associated with the particular flow, a size of an unused portion of the associated particular portion of the shared queue is greater than or equal to the size of the particular packet, and a size of an unused portion of the shared queue is less than or equal to the shared threshold; and
dropping (450;570;660) a particular packet from the particular flow of packets if:
a) the particular packet is not accepted by the dedicated queue associated with the particular flow, and
b) either the size of the used portion of the particular portion of the shared queue associated with the particular flow is greater than the flow threshold for that particular portion of the shared queue or the size of all used particular portions of the shared queue exceeds the shared threshold¹.
¹page 7, lines 15-24 and page 8, lines 9-12

2. The method of claim 1 wherein the size of the dedicated queue (210,215,220,225) varies for different flows.

3. The method of claim 1 wherein the size of the dedicated queue (210,215,220,225) is the same for all flows.

4. The method of claim 1 further comprising: associating (680,688) each received packet with a probability of being accepted into the shared queue, accepting (670) a particular packet from a particular flow of packets into the shared queue if the particular packet is not accepted by the dedicated queue associated with the particular flow and the probability associated with the particular packet is greater than the probability associated with one or more other received packets that have not been accepted by the dedicated queues associated with the flows of the received packets, and dropping (660) a particular packet from a particular flow of packets if the particular packet is not accepted into the dedicated queue associated with the particular flow and the particular packet is not accepted into the shared queue.

5. The method of claim 4, wherein the shared threshold is less than the size of the shared queue, the method further comprising:
associating (685) a particular packet from a particular flow of packets with a first probability if:
the particular packet is not accepted by the dedicated queue associated with the particular flow,
the size of the used portion of the shared queue is greater than the shared threshold, and
the size of the used portion of the particular portion of the shared queue associated with the particular flow is less than or equal to the flow threshold for that particular portion; and
associating (680) the particular packet from the particular flow of packets with a second probability if:
the particular packet is not accepted by the dedicated queue associated with the particular flow,
the size of the used portion of the shared queue is less than or equal to the shared threshold, and
the size of the used portion of the particular portion of the shared queue is greater than the flow threshold for that particular portion;
wherein the first probability is less than the second probability.

6. A computer readable medium storing a computer program configured to cause a processor to implement buffer memory management for a packet-switching application, the computer program comprising code segments for causing a processor to perform the method of any one of claims 1 to 5.

7. An apparatus for buffer memory management in a packet-switching application, the apparatus including a processor and memory connected to the processor, wherein the processor comprises one or more components to:
associate each of a plurality of flows of packets with a dedicated queue (210,215,220,225), and a particular portion (260,265,270,275) of a shared queue (250),
**characterised in that**:
each dedicated queue has a dedicated queue size and each particular portion of the shared queue has a size threshold and a flow threshold,
the shared queue has a shared threshold, and
a sum of the dedicated queue sizes and the shared queue sizes for all of the flows exceeds an amount of physical memory available to buffer packets;
and wherein the processor is operable to:
accept (430;530;630) a particular packet from a particular flow of packets into the dedicated queue associated with the particular flow if a size of an unused portion of the dedicated queue associated with the particular flow is greater than or equal to a size of the particular packet;
accept (470;560;670) the particular packet from the particular flow of packets into the associated particular portion of the shared queue if the particular packet is not accepted by the dedicated queue associated with the particular flow, a size of an unused portion of the associated particular portion of the shared queue is greater than or equal to the size of the particular packet, and a size of an unused portion of the shared queue is less than or equal to the shared threshold; and
drop (450;570;660) a particular packet from the particular flow of packets if:
a) the particular packet is not accepted by the dedicated queue associated with the particular flow, and
b) either the size of the used portion of the particular portion of the shared queue associated with the particular flow is greater than the flow threshold for that particular portion of the shared queue or the size of all used particular portions of the shared queue exceeds the shared threshold.

8. The apparatus of claim 7 wherein the size of the dedicated queue (210,215,220,225) varies for different flows.

9. The apparatus of claim 7 wherein the size of the dedicated queue (210,215,220,225) is the same for all flows.

10. The apparatus of claim 7, the processor further comprising one or more components to:
associate (680,685) each received packet with a probability of being accepted into the shared queue,
accept (670) a particular packet from a particular flow of packets into the shared queue if the particular packet is not accepted by the dedicated queue associated with the particular flow and the probability associated with the particular packet is greater than the probability associated with one or more other received packets that have not been accepted by the dedicated queues associated with the flows of the received packets, and
drop (660) a particular packet from a particular flow of packets if the particular packet is not accepted into the dedicated queue associated with the particular flow and the particular packet is not accepted into the shared queue.

11. The apparatus of claim 10, wherein the shared threshold is less than the size of the shared queue, the processor being further comprising one or more components to:
associate (685) a particular packet from a particular flow of packets with a first probability if:
the particular packet is not accepted by the dedicated queue associated with the particular flow,
the size of the used portion of the shared queue is greater than the shared threshold, and
the size of the used portion of the particular portion of the shared queue associated with the particular flow is less than or equal to the flow threshold for that particular portion; and
associate (680) the particular packet from the particular flow of packets with a second probability if:
the particular packet is not accepted by the dedicated queue associated with the particular flow,
the size of the used portion of the shared queue is less than or equal to the shared threshold, and
the size of the used portion of the particular portion of the shared queue is greater than the flow threshold for that particular portion;
wherein the first probability is less than the second probability.

12. A system for buffer memory management in a packet-switching application, the system comprising:
a traffic management device;
a port coupled to a transmission channel; and
a link between the traffic management device and the port,
wherein the traffic management device is comprised of one or more components adapted and arranged to perform the method of any one of claims 1 to 5.

## Patentansprüche

1. Pufferspeicherverwaltungsverfahren für eine Paketvermittlungsanwendung, wobei das Verfahren umfasst:
Verbinden eines jeden von mehreren Paketströmen mit einer zugeordneten Warteschlange (210, 215, 220, 225) und einem speziellen Anteil (260, 265, 270, 275) aus einer gemeinschaftlichen Warteschlange (250),
**dadurch gekennzeichnet, dass**:
jede zugeordnete Warteschlange eine zugeordnete Warteschlangengröße aufweist und jeder spezielle Anteil der gemeinschaftlichen Warteschlange eine Größe und einen Stromschwellwert aufweist,
die gemeinschaftliche Warteschlange einen gemeinschaftlichen Schwellwert aufweist und
eine Summe aus den zugeordneten Warteschlangengrößen und den gemeinschaftlichen Warteschlangengrößen für alle Ströme einen Umfang des physischen Speichers übersteigt, der für das Pufferspeichern von Paketen zur Verfügung steht;
und wobei die Schritte enthalten sind:
Übernehmen (430; 530; 630) eines speziellen Pakets aus einem speziellen Paketstrom in die zugeordnete Warteschlange, die mit dem speziellen Strom verbunden ist, wenn eine Größe eines ungenutzten Anteils der zugeordneten Warteschlange, die mit dem speziellen Strom verbunden ist, größer als eine oder gleich einer Größe des speziellen Pakets ist;
Übernehmen (470; 560; 670) des speziellen Pakets aus dem speziellen Paketstrom in den verbundenen speziellen Anteil der gemeinschaftlichen Warteschlange, wenn das spezielle Paket durch die zugeordnete Warteschlange, die mit dem speziellen Strom verbunden ist, nicht übernommen wird, eine Größe eines ungenutzten Anteils des verbundenen speziellen Anteils der gemeinschaftlichen Warteschlange größer als die oder gleich der Größe des speziellen Pakets ist und eine Größe eines ungenutzten Anteils der gemeinschaftlichen Warteschlange kleiner als der gemeinschaftliche Schwellwert oder gleich ihm ist; und
Entfernen (450; 570; 660) eines speziellen Pakets aus dem speziellen Paketstrom wenn:
(a) das spezielle Paket durch die zugeordnete Warteschlange, die mit dem speziellem Strom verbunden ist, nicht übernommen wird, und
(b) entweder die Größe des genutzten Anteils des speziellen Anteils der gemeinschaftlichen Warteschlange, die mit dem speziellen Strom verbunden ist, größer als der Stromschwellwert für diesen speziellen Anteil der gemeinschaftlichen Warteschlange ist oder die Größe aller genutzten speziellen Anteile der gemeinschaftlichen Warteschlange den gemeinschaftlichen Schwellwert übersteigt¹.
¹Seite 7, Zeilen 15 - 24 und Seite 8, Zeilen 9 - 12

2. Verfahren nach Anspruch 1, wobei die Größe der zugeordneten Warteschlange (210, 215, 220, 225) für unterschiedliche Ströme variiert.

3. Verfahren nach Anspruch 1, wobei die Größe der zugeordneten Warteschlange (210, 215, 220, 225) für alle Ströme die gleiche ist.

4. Verfahren nach Anspruch 1, ferner umfassend: Zuordnen (680, 688) einer Wahrscheinlichkeit für jedes empfangene Paket, in die gemeinschaftliche Warteschlange übernommen zu werden; Übernehmen (670) eines speziellen Pakets aus einem speziellen Paketstrom in die gemeinschaftliche Warteschlange, wenn das spezielle Paket durch die zugeordnete Warteschlange, die mit dem speziellen Strom verbunden ist, nicht übernommen wird und die Wahrscheinlichkeit, die mit dem speziellen Paket verbunden ist, größer als die Wahrscheinlichkeit ist, die mit einem oder mehreren anderen empfangenen Paketen verbunden ist, die nicht übernommen worden sind durch die zugeordneten Warteschlangen, die mit den Strömen der empfangenen Pakete verbunden sind, und
Entfernen (660) eines speziellen Pakets aus einem speziellen Paketstrom, wenn das spezielle Paket nicht in die zugeordnete Warteschlange übernommen wird, die mit dem speziellen Strom verbunden ist, und das spezielle Paket nicht in die gemeinschaftliche Warteschlange übernommen wird.

5. Verfahren nach Anspruch 4, wobei der gemeinschaftliche Schwellwert kleiner ist als die Größe der gemeinschaftlichen Warteschlange, wobei das Verfahren ferner umfasst:
Verbinden (685) eines speziellen Pakets aus einem speziellen Paketstrom mit einer ersten Wahrscheinlichkeit, wenn:
das spezielle Paket durch die zugeordnete Warteschlange, die mit dem speziellen Strom verbunden ist, nicht übernommen wird,
die Größe des genutzten Anteils der gemeinschaftlichen Warteschlange größer als der gemeinschaftliche Schwellwert ist, und
die Größe des genutzten Anteils des speziellen Anteils der gemeinschaftlichen Warteschlange, die mit dem speziellen Strom verbunden ist, kleiner als der oder gleich dem Stromschwellwert für diesen speziellen Anteil ist; und
Verbinden (680) des speziellen Pakets aus dem speziellen Paketstrom mit einer zweiten Wahrscheinlichkeit, wenn:
das spezielle Paket durch die zugeordnete Warteschlange, die mit dem speziellen Strom verbunden ist, nicht übernommen wird;
die Größe des genutzten Anteils der gemeinschaftlichen Warteschlange kleiner als der gemeinschaftliche Schwellwert oder gleich ihm ist, und
die Größe des genutzten Anteils des speziellen Anteils der gemeinschaftlichen Warteschlange größer als der Stromschwellwert für diesen speziellen Anteil ist,
wobei die erste Wahrscheinlichkeit kleiner als die zweite Wahrscheinlichkeit ist.

6. Computerlesbares Medium, das ein Computerprogramm speichert, das eingerichtet ist, einen Prozessor zum Umsetzen der Pufferspeicherverwaltung für eine Paketvermittlungsanwendung zu veranlassen, wobei das Computerprogramm Codesegmente umfasst, um einen Prozessor zum Durchführen des Verfahrens nach einem der Ansprüche 1 bis 5 zu veranlassen.

7. Vorrichtung für die Pufferspeicherverwaltung in einer Paketvermittlungsanwendung, wobei die Vorrichtung einen Prozessor und einen an den Prozessor angeschlossenen Speicher enthält, wobei der Prozessor eine oder mehrere Komponenten umfasst für das:
Verbinden eines jeden von mehreren Paketströmen mit einer zugeordneten Warteschlange (210, 215, 220, 225) und einem speziellen Anteil (260, 265, 270, 275) einer gemeinschaftlichen Warteschlange (250),
**dadurch gekennzeichnet, dass**:
jede zugeordnete Warteschlange eine zugeordnete Warteschlangengröße aufweist und jeder spezielle Anteil der gemeinschaftlichen Warteschlange eine Größenschwellwert und einen Stromschwellwert aufweist,
die gemeinschaftliche Warteschlange einen gemeinschaftlichen Schwellwert aufweist und
eine Summe aus den zugeordneten Warteschlangengrößen und den gemeinschaftlichen Warteschlangengrößen für alle Ströme einen Umfang des physischen Speichers übersteigt, der für das Pufferspeichern von Paketen zur Verfügung steht;
und wobei der Prozessor betriebsfähig ist für das:
Übernehmen (430; 530; 630) eines speziellen Pakets aus einem speziellen Paketstrom in die zugeordnete Warteschlange, die mit dem speziellen Strom verbunden ist, wenn eine Größe eines ungenutzten Anteils der zugeordneten Warteschlange, die mit dem speziellen Strom verbunden ist, größer als eine oder gleich einer Größe des speziellen Pakets ist;
Übernehmen (470; 560; 670) des speziellen Pakets aus dem speziellen Paketstrom in den zugeordneten speziellen Anteil der gemeinschaftlichen Warteschlange, wenn das spezielle Paket durch die zugeordnete Warteschlange, die mit dem speziellen Strom verbunden ist, nicht übernommen wird, eine Größe eines ungenutzten Anteils des verbundenen speziellen Anteils der gemeinschaftlichen Warteschlange größer als die oder gleich der Größe des speziellen Pakets ist und eine Größe eines ungenutzten Anteils der gemeinschaftlichen Warteschlange kleiner als der gemeinschaftliche Schwellwert oder gleich ihm ist; und
Entfernen (450; 570; 660) eines speziellen Pakets aus dem speziellen Paketstrom wenn:
(a) das spezielle Paket durch die zugeordnete Warteschlange, die mit dem speziellem Strom verbunden ist, nicht übernommen wird, und
(b) entweder die Größe des genutzten Anteils des speziellen Anteils der gemeinschaftlichen Warteschlange, die mit dem speziellen Strom verbunden ist, größer als der Stromschwellwert für diesen speziellen Anteil der gemeinschaftlichen Warteschlange ist oder die Größe aller genutzten speziellen Anteile der gemeinschaftlichen Warteschlange den gemeinschaftlichen Schwellwert übersteigt.

8. Vorrichtung nach Anspruch 7, wobei die Größe der zugeordneten Warteschlange (210, 215, 220, 225) für unterschiedliche Ströme variiert.

9. Verfahren nach Anspruch 7, wobei die Größe der zugeordneten Warteschlange (210, 215, 220, 225) für alle Ströme die gleiche ist.

10. Vorrichtung nach Anspruch 7, wobei der Prozessor ferner eine oder mehrere Komponenten umfasst für ein:
Zuordnen (680, 685) einer Wahrscheinlichkeit für jedes empfangene Paket, in die gemeinschaftliche Warteschlange übernommen zu werden;
Übernehmen (670) eines speziellen Pakets aus einem speziellen Paketstrom in die gemeinschaftliche Warteschlange, wenn das spezielle Paket durch die zugeordnete Warteschlange, die mit dem speziellen Strom verbunden ist, nicht übernommen wird und die Wahrscheinlichkeit, die mit dem speziellen Paket verbunden ist, größer als die Wahrscheinlichkeit ist, die mit einem oder mehreren anderen empfangenen Paketen verbunden ist, die nicht übernommen worden sind durch die zugeordneten Warteschlangen, die mit den Strömen der empfangenen Pakete verbunden sind, und
Entfernen (660) eines speziellen Pakets aus einem speziellen Paketstrom, wenn das spezielle Paket nicht in die zugeordnete Warteschlange übernommen wird, die mit dem speziellen Strom verbunden ist, und das spezielle Paket nicht in die gemeinschaftliche Warteschlange übernommen wird.

11. Vorrichtung nach Anspruch 10, wobei der gemeinschaftliche Schwellwert kleiner ist als die Größe der gemeinschaftlichen Warteschlange, wobei der Prozessor ferner eine oder mehrere Komponenten umfasst für ein:
Verbinden (685) eines speziellen Pakets aus einem speziellen Paketstrom mit einer ersten Wahrscheinlichkeit, wenn:
das spezielle Paket durch die zugeordnete Warteschlange, die mit dem speziellen Strom verbunden ist, nicht übernommen wird,
die Größe des genutzten Anteils der gemeinschaftlichen Warteschlange größer als der gemeinschaftliche Schwellwert ist, und
die Größe des genutzten Anteils des speziellen Anteils der gemeinschaftlichen Warteschlange, die mit dem speziellen Strom verbunden ist, kleiner als der oder gleich dem Stromschwellwert für diesen speziellen Anteil ist; und
Verbinden (680) des speziellen Pakets aus dem speziellen Paketstrom mit einer zweiten Wahrscheinlichkeit, wenn:
das spezielle Paket durch die zugeordnete Warteschlange, die mit dem speziellen Strom verbunden ist, nicht übernommen wird;
die Größe des genutzten Anteils der gemeinschaftlichen Warteschlange kleiner als der gemeinschaftliche Schwellwert oder gleich ihm ist, und
die Größe des genutzten Anteils des speziellen Anteils der gemeinschaftlichen Warteschlange größer als der Stromschwellwert für diesen speziellen Anteil ist,
wobei die erste Wahrscheinlichkeit kleiner als die zweite Wahrscheinlichkeit ist.

12. System für die Pufferspeicherverwaltung in einer Paketvermittlungsanwendung, wobei das System umfasst:
eine Verkehrsleiteinrichtung,
einen Anschluss, der an einen Übertragungskanal gekoppelt ist, und
eine Verbindung zwischen der Verkehrsleiteinrichtung und dem Anschluss,
wobei die Verkehrsleiteinrichtung aus einer oder mehreren Komponenten aufgebaut ist, die geeignet und eingerichtet sind, das Verfahren nach einem der Ansprüche 1 bis 5 auszuführen.

## Revendications

1. Procédé de gestion de mémoire tampon pour une application de commutation de paquet, le procédé comprenant :
une association de chacun d'une pluralité de flux de paquets à une file dédiée (210, 215, 220, 225) et une partie particulière (260, 265, 270, 275) d'une file partagée (250),
**caractérisé en ce que** :
chaque file dédiée a une taille de file dédiée et chaque partie particulière de la file partagée a une taille et un seuil de flux,
la file partagée a un seuil partagé, et
une somme des tailles de file dédiée et des tailles de file partagée pour tous les flux dépasse une quantité do mémoire physique disponible pour mettre en mémoire tampon des paquets ;
et **en ce que** le procédé comprend les étapes suivantes :
une acceptation (430 ; 530 ; 630) d'un paquet particulier à partir d'un flux particulier de paquets dans la file dédiée associée au flux particulier si une taille d'une partie inutilisée de la file dédiée associée au flux particulier est plus grande ou égale à une taille du paquet particulier ;
une acceptation (470 ; 560; 670) du paquet particulier à partir du flux particulier de paquets dans la partie particulière associée de la file partagée si le paquet particulier n'est pas accepté par la file dédiée associée au flux particulier, une taille d'une partie inutilisée de la partie particulière associée de la file partagée est plus grande ou égale à la taille du paquet particulier, et une taille d'une partie inutilisée de la file partagée est inférieure ou égale au seuil partagé; et
un rejet (450 ; 570 ; 660) d'un paquet particulier à partir du flux particulier de paquet si :
a) le paquet particulier n'est pas accepté par la file dédiée associée au flux particulier, et
b) soit la taille de la partie utilisée de la partie particulière de la file partagée associée au flux particulier est plus grande que le seuil de flux pour cette partie particulière de la taille partagée soit la taille de toutes les parties particulières utilisées de la file partagée dépasse le seuil partagé.

2. Procédé selon la revendication 1, dans lequel la taille de la file dédiée (210, 215, 220, 225) varie pour différents flux.

3. Procédé selon la revendication 1, dans lequel la taille de la file dédiée ((210, 215, 220. 225) est la même pour tous les flux.

4. Procédé selon la revendication 1, comprenant en outre: une association (680, 688) de chaque paquet reçu avec une probabilité d'être accepté dans la file partagée, l'acceptation (670) d'un paquet particulier à partir d'un flux particulier de paquets dans la file partagée si le paquet particulier n'est pas accepté par la file dédiée associée au flux particulier et la probabilité associée au paquet particulier est plus grande que la probabilité associée à un ou plusieurs autres paquets reçus qui n'ont pas été acceptés par les files dédiées associées aux flux de paquets reçus, et
Un rejet (660) d'un paquet particulier à partir d'un flux particulier de paquets si le paquet particulier n'est pas accepté dans la file dédiée associée au flux particulier et le paquet particulier n'est pas accepté dans la file partagée.

5. Procédé selon la revendication 4, dans lequel le seuil partagé est inférieur à la taille de la file partagée, le procédé comprenant en outre :
une association (685) d'un paquet particulier à partir d'un flux particulier de paquets avec une première probabilité si :
le paquet particulier n'est pas accepté par la file dédiée associée au flux particulier,
la taille de la partie utilisée de la file partagée est plus grande que le seuil partagé, et
la taille de la partie utilisée de la partie particulière de la file partagée associée au flux particulier est inférieure ou égale au seuil de flux pour cette partie particulière, et
une association (680) du paquet particulier à partir du flux particulier de paquets avec une seconde probabilité si :
le paquet particulier n'est pas accepté par la file dédiée associée au flux particulier,
la taille de la partie utilisée de la file partagée est inférieure ou égale au seuil partagé, et
la taille de la partie utilisée de la partie particulière de la file partagée est plus grande que le seuil de flux pour cette partie particulière ;
dans lequel la première probabilité est inférieure à la seconde probabilité.

6. Support lisible informatique stockant un programme informatique configuré pour conduire un processeur à implémenter une gestion de mémoire tampon pour une application de commutation de paquet, le programme informatique comprenant des segments de code pour conduire un processeur à réaliser le procède selon l'une quelconque des revendications 1 à 5.

7. Appareil pour la gestion de mémoire tampon dans une application de commutation de paquet, l'appareil comprenant un processeur et une mémoire raccordée au processeur, dans lequel le processeur comprend un ou plusieurs composants pour :
associer chacun d'une pluralité des flux de paquets à une file dédiée (210, 215, 220, 225), et une partie particulière (260, 265, 270, 275) d'une file partagée (250),
**caractérisé en ce que** :
chaque file dédiée a une taille de file dédiée et chaque partie particulière de la file partagée a un seuil de taille et un seuil de flux,
la file partagée a un seuil partagé, et
une somme des tailles de file dédiée et des tailles de file partagée pour tous les flux dépasse une quantité de mémoire physique disponible pour mettre en tampon des paquets,
et dans lequel le processeur est utilisable pour :
accepter (430 ; 530 ; 630) un paquet particulier à partir d'un flux particulier de paquets dans la file dédiée associée au flux particulier si une taille d'une partie inutilisée de la file dédiée associée au flux particulier est plus grande ou égale à une taille du paquet particulier;
accepter (470 ; 560; 670) le paquet particulier à partir du flux particulier de paquets dans la partie particulière associée de la file partagée si le paquet particulier n'est pas accepté par la file dédiée associée au flux particulier, une taille d'une partie inutilisée de la partie particulière associée de la file partagée est plus grande ou égale à la taille du paquet particulier, et une taille d'une partie inutilisée de la file partagée est inférieure ou égale au seuil partagé ; et
rejeter (450 ; 570 ; 660) un paquet particulier à partir du flux particulier de paquets si :
a) le paquet particulier n'est pas accepté par la file dédiée associée au flux particulier, et
b) soit la taille de la partie utilisée de la partie particulière de la file partagée associée au flux particulier est plus grande que le seuil de flux pour cette partie particulière de la file partagée soit la taille de toutes les parties particulières utilisées do la file partagée dépasse le seuil partagée.

8. Appareil selon la revendication 7, dans lequel la taille de la file dédiée (240, 215, 220, 225) varie pour différents flux.

9. Appareil selon la revendication 7, dans lequel la taille de la file dédiée (210, 215, 220, 225) est la même pour tous les flux.

10. Appareil selon la revendication 7, le processeur comprenant en outre un ou plusieurs composants pour :
associer (680, 685) chaque paquet reçu à une probabilité d'être accepté dans la file partagée,
accepter (670) un paquet particulier à partir du flux particulier de paquets dans la file partagée si le paquet particulier n'est pas accepté par la file dédiée associée au flux particulier et la probabilité associée avec le paquet particulier est plus grande que la probabilité associée avec un ou plusieurs autres paquets reçus qui n'ont pas été acceptés par les files dédiées associées aux flux des paquets reçus, et
rejeter (660) un paquet particulier à partir d'un flux particulier de paquets si le paquet particulier n'est pas accepté dans la file dédiée associée au flux particulier et le paquet particulier n'est pas accepté dans la file partagée.

11. Appareil selon la revendication 10, dans lequel le seuil partagé est inférieur à la taille de la file partagée, le processeur comprenant en outre un ou plusieurs composants pour :
associer (685) un paquet particulier à partir d'un flux particulier do paquets avec une première probabilité si :
le paquet particulier n'est pas accepté par la file dédiée associée au flux particulier.
la taille de la partie utilisée de la file partagée est plus grande que le seuil partagé, et
la taille de la partie utilisée de la partie particulière de la file partagée associée au flux particulier est inférieure ou égale au seuil de flux pour cette partie particulière ; et
associer (680) le paquet particulier à partir du flux particulier de paquets avec une seconde probabilité si :
le flux particulier n'est pas accepté par la file dédiée associée au flux particulier,
la taille de la partie utilisée de la file partagée est inférieure ou égale au seuil partagé, et
la taille de la partie utilisée de la partie particulière de la file partagée est plus grande que le seuil de flux pour cette partie particulière ;
dans lequel la première probabilité est inférieure à la seconde probabilité.

12. Système pour une gestion de mémoire tampon dans une application de commutation de paquet, le système comprenant :
un dispositif de gestion de trafic ;
un port couplé à un canal de transmission ; et
une liaison entre le dispositif de gestion de trafic et le port,
dans lequel le dispositif de gestion de trafic est composé d'un ou plusieurs composants adaptés et disposés pour réaliser le procédé d'une quelconque des revendications 1 à 5.
